# EUROPÄISCHE PATENTSCHRIFT

(11) **EP 0 452 743 B1**
(45) Veröffentlichungstag und Bekanntmachung des Hinweises auf die Patenterteilung: **14.09.1994**
(21) Anmeldenummer: 91105379.1
(22) Anmeldetag: 05.04.1991
(51) Int. Cl.: H01J 61/56, H01J 5/50

(54) **Kompakte Niederdruckentladungslampe**
Compact low pressure discharge lamp
Lampe à décharge compacte à basse pression

(30) Priorität: 20.04.1990 DE 4012684
(43) Veröffentlichungstag der Anmeldung: 23.10.1991
(73) Patentinhaber: Patent-Treuhand-Gesellschaft für elektrische Glühlampen mbH, 81543 München (DE)
(72) Erfinder: Wittmann, Horst, W-8901 Stadtbergen (DE)

(56) Entgegenhaltungen:
- EP-A- 179 473
- EP-A- 349 083

## Beschreibung

Die Erfindung betrifft eine kompakte Niederdruckentladungslampe, bestehend aus einem Entladungsgefäß mit Elektroden und Stromzuführungen und einem aus Kappe, Gehäuse und Montageplatte mit Vorschaltanordnung zusammengesetzten Sockel gemäß dem Oberbegriff des Anspruchs 1.

Kompakte Niederdruckentladungslampen dieser Art, wobei das Entladungsgefäß meist aus einem ein- oder mehrfach gebogenen Rohr besteht und im Sockel als Montageplatte eine Schaltungsplatine mit einer darauf verlöteten elektronischen Vorschaltanordnung integriert ist, ersetzen in zunehmendem Maß die Glühlampe im Haus- und Wohnbereich. Die Herstellungskosten für diese kompakten Niederdruckentladungslampen sind bisher noch recht hoch, da viele komplizierte Fertigungsschritte bei der Herstellung notwendig sind. Einer dieser Fertigungsschritte ist die elektrische Verbindung der Stromzuführungen des Entladungsgefäßes mit den entsprechenden Anschlüssen der Vorschaltanordnung. Zur Herstellung dieser Verbindung werden bisher meist die entsprechenden Verbingungsdrähte zusammengeführt und mit einer Metallhülse vercrimpt. In der EP-A-179 251 ist eine einseitig gesockelte Niederdruckentladungslampe beschrieben, bei der die elektrische Verbindung von Elektroden und Vorschaltgerät durch Kontaktstifte in der Kappe erfolgt, die beim Zusammenbau in Gegenkontakte auf der Montageplatte eingreifen. Die Stromzuführungen der Elektroden sind in entsprechende Aufnahmen an den Kontaktstiften eingeklemmt. Ein solches Kontaktierungssystem ist jedoch sehr aufwendig, da zusätzliche Kontaktierungselemente in Kappe und Montageplatte eingebaut werden müssen. Zudem erhöhen diese Kontaktierungselemente die Herstellungskosten.

Aufgabe der Erfindung ist es, durch einen speziellen Aufbau der Lampe im Bereich des Sockels und der Montageplatte eine einfache maschinelle Verbindung der Stromzuführungen des Entladungsgefäßes mit den entsprechenden Anschlüssen der Vorschaltanordnung zu ermöglichen. Der für diese Kontaktierung benötigte Aufbau sollte möglichst einfach und kostengünstig herzustellen sein.

Die Aufgabe wird bei der kompakten Niederdruckentladungslampe durch die kennzeichnenden Merkmale des ersten Anspruchs gelöst. Weitere vorteilhafte Merkmale sind den abhängigen Ansprüchen zu entnehmen.

Mit Hilfe der Haltezapfen werden die Enden der Stromzuführungen senkrecht zu den bügelförmigen Anschlußdrähten der Vorschaltanordnung, die im wesentlichen parallel zur Montageplatte verlaufen, ausgerichtet. Beim Zusammenbau von Sockelgehäuse und Montageplatte mit der Sockelkappe werden die jeweiligen zu kontaktierenden Drähte etwa im rechten Winkel hintereinander angeordnet und mit Hilfe des Haltezapfens und der Innenwand des Sockelgehäuses federnd gegeneinandergedrückt, so daß eine elektrische Verbindung zwischen Elektroden und Vorschaltanordnung hergestellt ist.

Besonders einfach gestaltet sich die Ausrichtung der Stromzuführungen, wenn die Haltezapfen aus dem verlängerten Rand der Sockelkappe gebildet sind und zum Fixieren der Stromzuführungen am freien Ende eine Kerbe aufweisen. Die Enden der Stromzuführungen sind dann - aus dem Innenraum der Kappe kommend - durch die Einkerbung und ein Stück an der Außenwand des rechteckigen Haltezapfens entlanggelegt.

Die Anschlußdrähte der Vorschaltanordnung bestehen vorteilhaft aus U-förmig gebogenen Drahtbügeln, dessen beide Enden mit der entsprechenden Leiterbahn am Rande der Montageplatte verlötet sind. Die U-förmigen Drahtbügel besitzen rechtwinklige Ecken und sind auf der der Sockelhülse zugewandten Seite der Montageplatte angeordnet. Sie stehen nur wenig über den Rand der Montageplatte hinaus und liegen mit ihren rechtwinkligen Ecken auf den Enden von Rippen mit rechteckigem Querschnitt auf, die an der Innenwand des zylinderförmigen Bereichs des Gehäuses parallel zur Lampenlängsachse angebracht sind. Durch bogenförmige Ausbuchtungen der Drahtbügel - senkrecht zur Montageplatte gesehen - am Übergang zur Lötbefestigung wird zusätzlich eine Federwirkung in radialer Richtung auf die Innenwand des Gehäuses erreicht.

Beim Zusammenbau von Gehäuse und Montageplatte mit der Kappe werden die Haltezapfen durch die U-förmigen Drahtbügel gesteckt, so daß sich die an der Außenwand des Haltezapfens anliegenden Enden der Stromzuführungen mit den U-förmigen Drahtbügeln der Vorschaltanordnungsanschlüsse kreuzen. Zur Erleichterung dieses Fertigungsschritts sind die Enden der Haltezapfen mit einer Abschrägung versehen. Damit ein genügend großer Freiraum innerhalb der U-förmigen Drahtbügel für die Haltezapfen und die Stromzuführungen vorhanden ist, sind zusätzlich Einkerbungen an der Montageplatte zwischen den beiden Lötbefestigungen jedes Drahtbügels vorgenommen. Die Rippen an der Gehäuseinnenwand verhindern, daß beim Zusammenbau des Sockels die U-förmigen Drahtbügel durch die Haltezapfen in Richtung Sockelhülse weggedrückt und verbogen werden können. Zwischen den beiden Rippen zur Auflage der Drahtbügelecken sind zusätzlich ein oder mehrere Anlagerippen mit dreieckigem Querschnitt und geringerer Höhe angebracht. Diese Anlagerippen haben die Aufgabe, bei verbundenem Sockel den Teil des Drahtbügels zwischen den rechtwinkligen Ecken verstärkt gegen den Haltezapfen und damit gegen die Enden der jeweiligen Stromzuführung zu drücken.

Die Enden der Stromzuführungen im Bereich der Haltezapfen und die bügelförmigen Anschlußdrähte bestehen aus verzinnten Drähten mit mindestens 4 µm Zinnauflage. Die Verzinnung garantiert eine sichere und dauerhafte Kontaktierung ohne Oxidation. Im Bereich der Quetschungen bestehen die Stromzuführungen aus einem aus 50 % Eisen, 47 % Nickel und 3 % Chrom (Markenname Vacuvit) zusammengesetzten Draht, ein besonders für gasdichte Einschmelzungen geeignetes Material. Da Vacuvit-Draht oxidiert, kann eine direkte Verbindung von Vacuvit-Draht mit verzinntem Draht längerfristig zu einem Ausfall der Lampe führen. Zur Erleichterung der Stumpfschweißung ist zwischen das Ende des Vacuvit-Drahtes und den verzinnten Draht ein Stück Kupfermanteldraht (Warenzeichen KPS-Draht, ein Stahldraht mit einem Kupfermantel) eingefügt.

Die Erfindung ist anhand eines Ausführungsbeispiels in den nachfolgenden Figuren näher veranschaulicht.
- Figur 1: zeigt eine Seitenansicht einer teilweise geschnittenen kompakten Niederdruckentladungslampe
- Figur 2: zeigt in Draufsicht schematisiert den Verlauf der Stromzuführungen vom Entladungsgefäß zur Steckkontaktierung mit den bügelförmigen Anschlußdrähten der Vorschaltanordnung
- Figur 3: zeigt in Draufsicht die Steckkontaktierung der Stromzuführungen mit den bügelförmigen Anschlußdrähten
- Figur 4: zeigt in Seitenansicht den Verlauf der Stromzuführungen vom Entladungsgefäß zur Steckkontaktierung mit den bügelförmigen Anschlußdrähten
- Figur 5: zeigt eine Frontansicht der Haltezapfen mit den Enden der Stromzuführungen und den bügelförmigen Anschlußdrähten

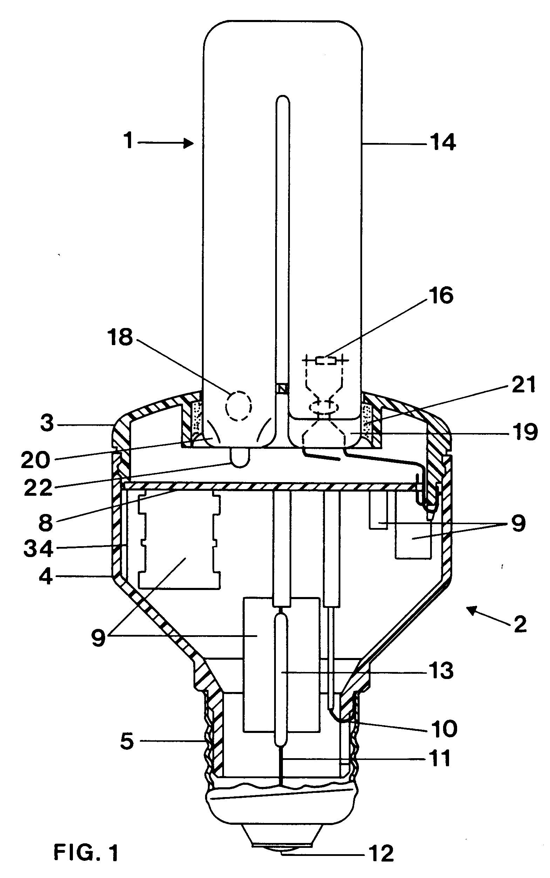

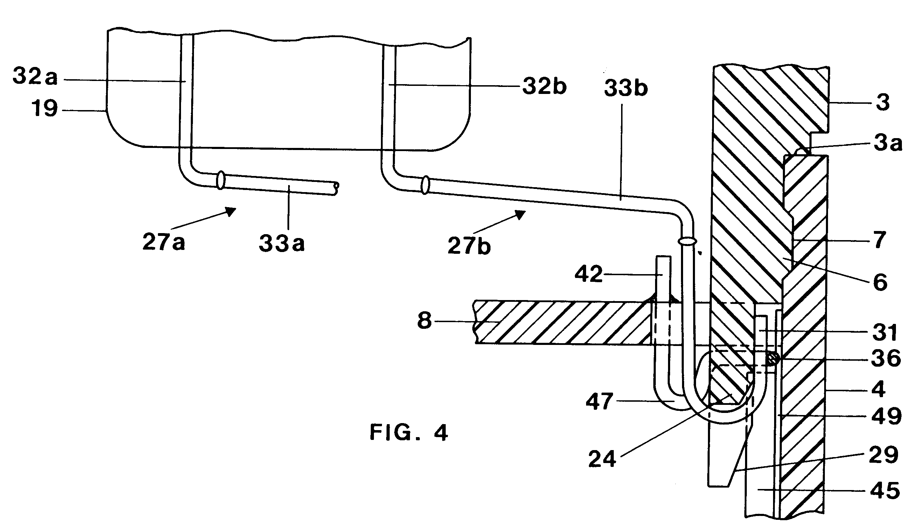

In Figur 1 ist die Seitenansicht einer erfindungsgemäßen kompakten Niederdruckentladungslampe wiedergegeben. Die Lampe besteht im wesentlichen aus einem Entladungsgefäß 1 und einem Sockel 2, wobei der Sockel 2 aus einer Kappe 3 und einem Gehäuse 4 zusammengesetzt ist. Das Gehäuse 4 weist einen zylinderförmigen Bereich und einen kegelstumpfförmigen Bereich auf, an dessen spitzem Ende eine Sockelhülse 5 in Form eines E27-Sockels befestigt ist. Durch Aufschnappen des inneren Randes des Gehäuses 4 auf den äußeren Rand der Kappe 3, wobei, wie in Fig. 4 vergrößert dargestellt, ein umlaufender Wulst 6 an der Kappe 3 in eine Ringnut 7 am Gehäuse 4 einrastet, wird eine fast unlösbare Verbindung zwischen den beiden Teilen hergestellt.

Im Innern des zylindrischen Gehäuseteils ist senkrecht zur Lampenlängsachse eine Montageplatte 8 in Form einer Platine angeordnet, die auf der dem Entladungsgefäß 1 zugewandten Seite Leiterbahnen und auf der der Sockelhülse 5 zugewandten Seite Schaltungselemente 9 einer Vorschaltanordnung trägt. Die Vorschaltanordnung ist über Netzanschlußleitungen 10, 11 mit der Sockelhülse 5 elektrisch verbunden, wobei in die Leitung 11, die mit dem Bodenkontakt 12 der Sockelhülse 5 verlötet ist, zusätzlich eine Sicherungspatrone 13 geschaltet ist.

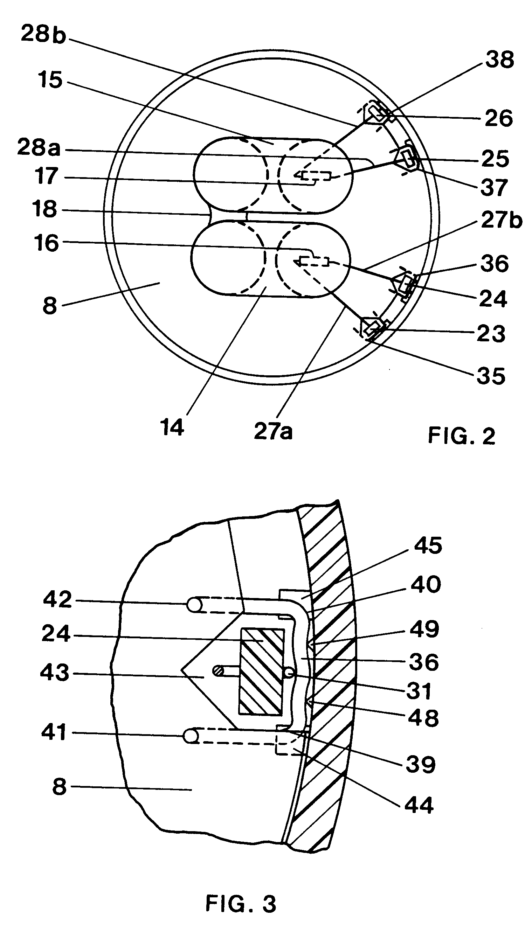

Das Entladungsgefäß 1 besteht, wie aus den Figuren 1 und 2 ersichtlich, aus zwei U-förmig gebogenen Rohrstücken 14, 15, wobei jeweils ein Schenkel jedes Rohrstücks 14, 15 eine Elektrode 16, 17 trägt und die beiden anderen Schenkel durch einen Durchlaß 18 miteinander verbunden sind. Die freien Enden der Rohrstücke 14, 15 sind durch Quetschungen 19, 20 gasdicht verschlossen und sitzen innerhalb der Sockelkappe 3, wo sie mittels Kitt 21 befestigt sind. Außerdem ist an dem elektrodenfreien Ende des Rohrstücks 14 ein Pumpstengel 22 angeschmolzen.

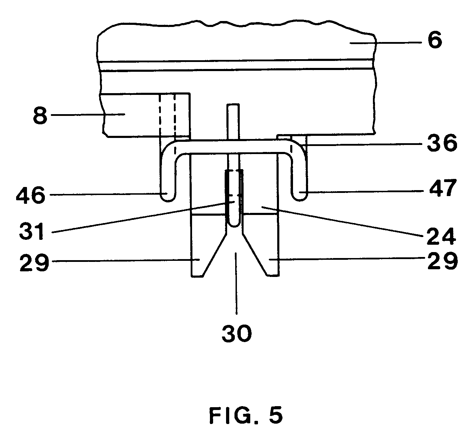

Die Sockelkappe 3 weist in der Verlängerung des Randes vier Haltezapfen 23 bis 26 auf, wobei an benachbarte Haltezapfen 23, 24 und 25, 26, wie in Figur 2 dargestellt, die Enden der beiden Stromzuführungen 27a, b und 28a, b der Elektroden 16, 17 geführt sind. Die Haltezapfen 23 bis 26 haben, wie aus den Figuren 3 bis 5 ersichtlich, einen rechteckigen Querschnitt mit einer Breite von 3 mm und einer Dicke von 1,5 mm und sind 6 mm lang. Das freie Ende der Haltezapfen 23 bis 26 besitzt, wie für den Haltezapfen 24 in den Figuren 4 und 5 gezeigt, eine Abschrägung 29 und ist mit einer Einkerbung 30 versehen. Die Enden der Stromzuführungen 27a, b und 28a, b sind, wie für das Ende 31 gezeigt, an der inneren Breitseite entlang zum freien Ende des Haltezapfens 24 geführt. Von dort sind sie durch die Einkerbung 30 und an der äußeren Breitseite wieder knapp bis zum Ansatzpunkt des Haltezapfens 24 zurückgeführt. Zwischen den Enden der Stromzuführungen 27a, b und 28a, b muß, wie für das Ende 31 gezeigt, eine genügend große Kriechstrecke bis zur Trennfuge 3a zwischen Kappe 3 und Gehäuse 4 vorhanden sein, damit kein Stromfluß außen am Sockel 2 auftritt. Alle Stromzuführungen bestehen, wie für die Stromzuführungen 27b und (teilweise gezeigt) 27a in Figur 4 zu sehen, im Bereich der Quetschungen 19 aus Vacuvit-Draht 32a, b und im Bereich des Haltezapfens 24 aus verzinntem Draht 31. Dazwischen ist ein Stück KPS-Draht 33a, b durch Stumpfschweißung eingefügt. Der Durchmesser der Stromzuführungen (27a, b; 28a, b) beträgt 0,4 mm.

Die als Platine ausgeführte Montageplatte 8 ist mit Hilfe von Halterippen 34 (s. Figur 1) an der Innenwand des zylindrischen Teils des Sockelgehäuses 4 so fixiert, daß bei zusammengebautem Sockel 2 die mit den Leiterbahnen versehene Oberfläche in Höhe des jeweiligen Ansatzbereiches der Haltezapfen 23 bis 26 liegt. Die Montageplatte 8 reicht bis fast an die Innenwand des Sockelgehäuses 4 heran und weist im Bereich der Haltezapfen 23 bis 26 Aussparungen auf. Dort sind auch die elektrischen Anschlüsse der Vorschaltanordnung an die Stromzuführungen ange- bracht. Sie bestehen, wie aus den Figuren 2 bis 5 ersichtlich, aus U-förmig gebogenen Drahtbügeln 35 bis 38 mit rechtwinkligen Ecken 39, 40, die mit ihren beiden Enden 41, 42 auf der der Sockelhülse 5 zugewandten Seite in die Montageplatte 8 gesteckt und auf der der Kappe 3 zugewandten Seite der Montageplatte 8 eingelötet sind. Beide Lötstellen sind über eine Leiterbahn auf der Montageplatte 8 mit den Schaltelementen 9 der Vorschaltanordnung verbunden. Damit bei zusammengebautem Sockel 2 die an den Haltezapfen 23 bis 26 befestigten Enden 31 der Stromzuführungen 27a, b und 28a, b keinen ungewollten elektrischen Kontakt mit den Leiterbahnen erhalten, sind zwischen den beiden aufgelöteten Enden 41, 42 jedes U-förmig gebogenen Drahtbügels 35 bis 38 zusätzlich Einkerbungen 43 an der Montageplatte 8 vorgenommen. Die rechtwinkligen Ecken 39, 40 der bügelförmigen Anschlußdrähte 35 bis 38 liegen auf Rippen 44, 45 mit rechteckigem Querschnitt und einer Höhe von 1 mm auf, die parallel zur Lampenlängsachse an der Innenwand des zylindrischen Teils des Sockelgehäuses 4 angebracht sind. Um eine verstärkte Federung zu erhalten, sind die bügelförmigen Anschlußdrähte 35 bis 38, wie in Figur 4 und 5 für den Anschlußdraht 36 gezeigt, nahe den Lötbefestigungen mit einer bogenförmigen Ausbuchtung 46, 47 versehen. Zur guten Kontaktierung und Federkraftverstärkung der U-förmigen Drahtbügel 35 bis 38 mit den Enden 31 der Stromzuführungen 27a, b und 28a, b sind zwischen den Auflagerippen 44, 45 jeweils noch zwei Anlagerippen 48, 49 mit dreieckigem Querschnitt und einer Höhe von 0,2 mm an der Innenwand des Gehäuses 4 angebracht.

Die U-förmigen Drahtbügel 35 bis 38 bestehen wie die Enden der Stromzuführungen aus verzinntem Draht mit einer Zinnauflage von mindestens 4 µm und haben einen Durchmesser von 0,5 mm.

## Patentansprüche

1. Kompakte Niederdruckentladungslampe, bestehend aus einem Entladungsgefäß (1) mit Elektroden (16, 17) und Stromzuführungen (27a, b; 28a, b) und einem aus Kappe (3), Gehäuse (4) und Montageplatte (8) mit Vorschaltanordnung zusammengesetzten Sockel (2), wobei der Sockel (2) folgende Merkmale aufweist:
- die Kappe (3) des Sockels (2) umgibt zumindest die Enden des Entladungsgefäßes (1)
- das Gehäuse (4) des Sockels (2) besitzt einen zylinderförmigen und einen daran angesetzten kegelstumpfförmigen Bereich
- der kegelstumpfförmige Bereich des Sockelgehäuses (4) trägt an seinem Ende mit kleinerem Durchmesser eine Sockelhülse (5)
- die Montageplatte (8) mit der Vorschaltanordnung ist senkrecht zur Lampenlängsachse im Innern des zylinderförmigen Bereichs des Sockelgehäuses (4) angebracht und über elektrische Anschlüsse mit den Stromzuführungen (27a, b; 28a, b) des Entladungsgefäßes (1) und über Netzanschlußleitungen (10, 11) mit der Sockelhülse (5) verbunden
- Kappe (3) und Gehäuse (4) des Sockels (2) sind durch Schieben des zylinderförmigen Randes des Gehäuses (4) über den Rand der Kappe (3) miteinander verbunden,
gekennzeichnet durch die folgenden Merkmale:
- die Enden (31) der Stromzuführungen (27a, b; 28a, b) des Entladungsgefäßes (1) sind mit Hilfe von Haltezapfen (23, 24, 25, 26) im Bereich des Randes der Sockelkappe (3) parallel zur Lampenlängsachse ausgerichtet
- die elektrischen Anschlüsse der Vorschaltanordnung an die Stromzuführungen (27a, b; 28a, b) bestehen aus bügelförmig gebogenen Drähten (35, 36, 37, 38), die im wesentlichen senkrecht zur Lampenlängsachse verlaufen
- bei zusammengesetztem Sockel (2) werden die bügelförmigen Anschlußdrähte (35, 36, 37, 38) der Vorschaltanordnung durch die Innenwand des zylinderförmigen Bereichs des Sockelgehäuses (4) und die Haltezapfen (23, 24, 25, 26) der Sockelkappe (3) gegen die Enden (31) der Stromzuführungen (27a, b; 28a, b) des Entladungsgefäßes (1) gedrückt, so daß eine elektrische Verbindung zwischen Elektroden (16, 17) und Vorschaltanordnung hergestellt ist.

2. Kompakte Niederdruckentladungslampe nach Anspruch 1, dadurch gekennzeichnet, daß die Haltezapfen (23, 24, 25, 26) aus Verlängerungen des Randes der Sockelkappe (3) gebildet sind.

3. Kompakte Niederdruckentladungslampe nach Anspruch 2, dadurch gekennzeichnet, daß die Haltezapfen (23, 24, 25, 26) einen rechteckigen Querschnitt besitzen.

4. Kompakte Niederdruckentladungslampe nach Anspruch 1, dadurch gekennzeichnet, daß die freien Enden der Haltezapfen (23, 24, 25, 26) eine Einkerbung (30) aufweisen.

5. Kompakte Niederdruckentladungslampe nach Anspruch 1, dadurch gekennzeichnet, daß die freien Enden der Haltezapfen (23, 24, 25, 26) mit einer Abschrägung (29) versehen sind.

6. Kompakte Niederdruckentladungslampe nach Anspruch 1 und 4, dadurch gekennzeichnet, daß die Enden (31) der Stromzuführungen (27a, b; 28a, b) des Entladungsgefäßes (1) von innen durch die Einkerbungen (30) und an der Außenwand der Haltezapfen (23, 24, 25, 26) entlang geführt sind.

7. Kompakte Niederdruckentladungslampe nach Anspruch 1, dadurch gekennzeichnet, daß die Montageplatte (8) eine Form besitzt, deren Außenabmessungen etwas kleiner als der innere Querschnitt des zylinderförmigen Bereichs des Sockelgehäuses (4) sind.

8. Kompakte Niederdruckentladungslampe nach Anspruch 1, dadurch gekennzeichnet, daß die beiden Enden (41, 42) der bügelförmigen Anschlußdrähte (35, 36, 37, 38) der Vorschaltanordnung am Rand der Montageplatte (8) auf der der Sockelhülse (5) zugewandten Seite in die Montageplatte (8) gesteckt und auf der der Kappe (3) zugewandten Seite der Montageplatte (8) eingelötet sind.

9. Kompakte Niederdruckentladungslampe nach Anspruch 1, dadurch gekennzeichnet, daß die bügelförmigen Anschlußdrähte (35, 36, 37, 38) der Vorschaltanordnung eine in Draufsicht U-förmige Gestalt mit im wesentlichen rechtwinkligen Ecken (39, 40) besitzen.

10. Kompakte Niederdruckentladungslampe nach einem oder mehreren der Ansprüche 1 bis 9, dadurch gekennzeichnet, daß bei zusammengesetztem Sockel (2) die Haltezapfen (23, 24, 25, 26) mit den Enden (31) der Stromzuführungen (27a, b; 28a, b) durch die bügelförmigen Anschlußdrähte (35, 36, 37, 38) mit U-förmiger Gestalt gesteckt sind.

11. Kompakte Niederdruckentladungslampe nach Anspruch 1, dadurch gekennzeichnet, daß die bügelförmigen Anschlußdrähte (35, 36, 37, 38) der Vorschaltanordnung am Übergang zur Lötbefestigung auf der Montageplatte (8) - senkrecht zur Montageplatte (8) gesehen - bogenförmige Ausbuchtungen (46, 47) besitzen.

12. Kompakte Niederdruckentladungslampe nach einem oder mehreren der Ansprüche 7 bis 11, dadurch gekennzeichnet, daß der Rand der Montageplatte (8) zwischen den beiden aufgelöteten Enden (41, 42) jedes bügelförmigen Anschlußdrahtes (35, 36, 37, 38) der Vorschaltanordnung eine Einkerbung (43) aufweist.

13. Kompakte Niederdruckentladungslampe nach Anspruch 1, dadurch gekennzeichnet, daß an der Innenwand des zylinderförmigen Bereichs des Sockelgehäuses (4) Rippen (44, 45) mit rechteckigem Querschnitt angebracht sind, die parallel zur Lampenlängsachse verlaufen.

14. Kompakte Niederdruckentladungslampe nach Anspruch 13, dadurch gekennzeichnet, daß die Rippen (44, 45) an den Stellen der Innenwand des Sockelgehäuses (4) angebracht sind, an denen die rechtwinkligen Ecken (39, 40) der bügelförmigen Anschlußdrähte (35, 36, 37, 38) bei zusammengesetztem Sockel (2) die Wand des Sockelgehäuses (4) berühren.

15. Kompakte Niederdruckentladungslampe nach Anspruch 9 und 14, dadurch gekennzeichnet, daß die bügelförmigen Anschlußdrähte (35, 36, 37, 38) mit den rechtwinkligen Ecken (39, 40) bei zusammengesetztem Sockel (2) auf den Enden der Rippen (44, 45) aufliegen.

16. Kompakte Niederdruckentladungslampe nach Anspruch 13, dadurch gekennzeichnet, daß zwischen je zwei Rippen (44, 45) zur Auflage der rechtwinkligen Ecken (39, 40) der bügelförmigen Anschlußdrähte (35, 36, 37, 38) ein oder mehrere Anlagerippen (48, 49) mit dreieckigem Querschnitt angebracht sind, die ebenfalls parallel zur Lampenlängsachse verlaufen und bei zusammengesetztem Sockel (2) gegen die bügelförmigen Anschlußdrähte (35, 36, 37, 38) drücken.

17. Kompakte Niederdruckentladungslampe nach Anspruch 6, dadurch gekennzeichnet, daß die Enden (31) der Stromzuführungen (27a, b; 28a, b) des Entladungsgefäßes (1) aus verzinntem Draht mit mindestens 4 µm Zinnauflage bestehen.

18. Kompakte Niederdruckentladungslampe nach Anspruch 1, dadurch gekennzeichnet, daß die Teile (32a, b) der Stromzuführungen (27a, b; 28a, b) im Bereich der Quetschungen (19) des Entladungsgefäßes (1) aus einem aus 50 % Eisen, 47 % Nickel und 3 % Chrom zusammengesetzten Draht bestehen.

19. Kompakte Niederdruckentladungslampe nach Anspruch 17 und 18, dadurch gekennzeichnet, daß zwischen die Enden (31) und die im Bereich der Quetschungen (19) befindlichen Teile (32a, b) der Stromzuführungen (27a, b; 28a, b) Drahtstücke (33a, b) aus Kupfermanteldraht durch Stumpfschweißung eingefügt sind.

20. Kompakte Niederdruckentladungslampe nach Anspruch 1, dadurch gekennzeichnet, daß die bügelförmigen Anschlußdrähte (35, 36, 37, 38) der Vorschaltanordnung aus verzinntem Draht mit mindestens 4 µm Zinnauflage bestehen.

## Claims

1. Compact low-pressure discharge lamp, comprising a discharge vessel (1) having electrodes (16, 17) and current supply leads (27a, b; 28a, b) and a base (2), which is assembled from a cap (3), a housing (4), and a mounting plate (8), the base (2) exhibiting the following features:
- the cap (3) of the base (2) surrounds at least the ends of the discharge vessel (1)
- the housing (4) of the base (2) has a cylindrical portion and attached to it a truncated-cone-shaped portion
- the truncated-cone-shaped portion of the base housing (4) carries at its end having a smaller diameter a base sleeve (5)
- the mounting plate (8) having the ballast arrangement is fitted perpendicularly to the longitudinal lamp axis in the interior of the cylindrical portion of the base housing (4) and joined to the current supply leads (27a, b; 28a, b) of the discharge vessel (1) via electrical connections and to the base sleeve (5) via mains supply leads (10, 11)
- cap (3) and housing (4) of the base (2) are joined to one another by displacing the cylindrical edge of the housing (4) over the edge of the cap (3),
characterized by the following features:
- the ends (31) of the current supply leads (27a, b; 28a, b) of the discharge vessel (1) are aligned parallel to the longitudinal lamp axis in the region of the edge of the base cap (3) by means of holding pins (23, 24, 25, 26)
- the electrical connections of the ballast arrangement to the current supply leads (27a, b; 28a, b) comprise wires (35, 36, 37, 38) bent in a bow-shape, which run substantially perpendicular to the longitudinal lamp axis
- in the case of an assembled base (2) the bow-shaped terminal wires (35, 36, 37, 38) of the ballast arrangement are pressed by the inner wall of the cylindrical portion of the base housing (4) and the holding pins (23, 24, 25, 26) of the base cap (3) against the ends (31) of the current supply leads (27a, b; 28a, b) of the discharge vessel (1), so that an electrical connection between electrodes (16, 17) and ballast arrangement is produced.

2. Compact low-pressure discharge lamp according to Claim 1, characterized in that the holding pins (23, 24, 25, 26) are formed from extensions of the edge of the base cap (3).

3. Compact low-pressure discharge lamp according to Claim 2, characterized in that the holding pins (23, 24, 25, 26) have a rectangular cross section.

4. Compact low-pressure discharge lamp according to Claim 1, characterized in that the free ends of the holding pins (23, 24, 25, 26) exhibit a notch (30).

5. Compact low-pressure discharge lamp according to Claim 1, characterized in that the free ends of the holding pins (23, 24, 25, 26) are provided with a bevelling (29).

6. Compact low-pressure discharge lamp according to Claims 1 and 4, characterized in that the ends (31) of the current supply leads (27a, b; 28a, b) of the discharge vessel (1) are guided from inside through the notches (30) and along the outer wall of the holding pins (23, 24, 25, 26).

7. Compact low-pressure discharge lamp according to Claim 1, characterized in that the mounting plate (8) has a form, the external dimensions of which are slightly smaller than the inner cross-section of the cylindrical portion of the base housing (4).

8. Compact low-pressure discharge lamp according to Claim 1, characterized in that the two ends (41, 42) of the bow-shaped terminal wires (35, 36, 37, 38) of the ballast arrangement are plugged into the mounting plate (8) at the edge of the mounting plate (8) on the side facing the base sleeve (5), and are soldered in on the side of the mounting plate (8) facing the cap (3).

9. Compact low-pressure discharge lamp according to Claim 1, characterized in that the bow-shaped terminal wires (35, 36, 37, 38) of the ballast arrangement have, in top view, a U-shaped form having essentially right-angled corners (39, 40).

10. Compact low-pressure discharge lamp according to one or more of claims 1 to 9, characterized in that in the case of an assembled base (2) the holding pins (23, 24, 25, 26) with the ends (31) of the current supply leads (27a, b; 28a, b) are plugged through the bow-shaped terminal wires (35, 36, 37, 38), which have a U-shaped form.

11. Compact low-pressure discharge lamp according to Claim 1, characterized in that the bow-shaped terminal wires (35, 36, 37, 38) of the ballast arrangement have arch-shaped recesses (46, 47) at the transition to the solder fastening on the mounting plate (8) - seen perpendicularly to the mounting plate (8).

12. Compact low-pressure discharge lamp according to one or more of Claims 7 to 11, characterized in that the edge of the mounting plate (8) exhibits a notch (43) between the two soldered-on ends (41, 42) of each bow-shaped terminal wire (35, 36, 37, 38).

13. Compact low-pressure discharge lamp according to Claim 1, characterized in that ribs (44, 45) having a rectangular cross-section are fixed to the inner wall of the cylindrical portion of the base housing (4), which run parallel to the longitudinal lamp axis.

14. Compact low-pressure discharge lamp according to Claim 13, characterized in that the ribs (44, 45) are fixed to those positions of the inner wall of the base housing (4) where in the case of an assembled base (2) the right-angled corners (39, 40) of the bow-shaped terminal wires (35, 36, 37, 38) meet the wall of the base housing (4).

15. Compact low-pressure discharge lamp according to Claims 9 and 14, characterized in that in the case of an assembled base the bow-shaped terminal wires (35, 36, 37, 38) rest on the ends of the ribs (44, 45) by means of the right-angled corners (39, 40).

16. Compact low-pressure discharge lamp according to Claim 13, characterized in that between two respective ribs (44, 45) for supporting the rectangular corners (39, 40) of the bow-shaped terminal wires (35, 36, 37, 38), one or more contact ribs (48, 49) having a triangular cross-section are fixed which likewise run parallel to the longitudinal lamp axis and in the case of an assembled base (2) press against the bow-shaped terminal wires (35, 36, 37, 38).

17. Compact low-pressure discharge lamp according to Claim 6, characterized in that the ends (31) of the current supply leads (27a, b; 28a, b) of the discharge vessel (1) comprise tinned wire having a tin coating of at least 4 µm.

18. Compact low-pressure discharge lamp according to Claim 1, characterized in that the parts (32a, b) of the current supply leads (27a, b; 28a, b) in the region of the pinches (19) of the discharge vessel (1) comprise a wire composed of 50% iron, 47% nickel and 3% chromium.

19. Compact low-pressure discharge lamp according to Claims 17 and 18, characterized in that lengths of wire (33a, b) from copper-clad wire are inserted by means of butt welding between the ends (31) and the parts (32a, b) of the current supply leads (27a, b; 28a, b) which are located in the region of the pinches (19).

20. Compact low-pressure discharge lamp according to Claim 1, characterized in that the bow-shaped terminal wires (35, 36, 37, 38) of the ballast arrangement consist of tinned wire having a tin coating of at least 4 µm.

## Revendications

1. Lampe à décharge basse pression, peu encombrante, constituée d'une enceinte de décharge (1) avec des électrodes (16, 17) et des entrées de courant (27a, b ; 28a, b), et d'une embase (2) composée d'un couvercle (3), d'un boîtier (4) et d'une plaque de montage (8) avec un dispositif de connexion en série, l'embase (2) présentant les caractéristiques ci-après :
- le couvercle (3) de l'embase (2) entoure au moins les extrémités de l'enceinte de décharge (1)
- le boîtier (4) de l'embase (2) comporte une zone de forme cylindrique et une zone en forme de cône tronqué qui y est rajoutée
- la zone en forme de cône tronqué du boîtier (4) de l'embase porte une douille (5) sur son extrémité de plus petit diamètre
- la plaque de montage (8) avec le dispositif de connexion en série est disposée perpendiculairement à l'axe longitudinal de la lampe, à l'intérieur de la zone de forme cylindrique du boîtier (4) du embase, et est reliée aux entrées de courant (27a, b ; 28a, b) de l'enceinte de décharge (1) par l'intermédiaire de bornes électriques, et à la douille (5) de l'embase par l'intermédiaire de lignes de raccordement au réseau (10, 11)
- le couvercle (3) et le boîtier (4) de l'embase (2) sont reliés entre eux par l'emboîtement du bord de forme cylindrique du boîtier (4) qui coulisse sur le bord du couvercle (3),
remarquable par les caractéristiques suivantes :
- dans la zone du bord du couvercle (3) de l'embase, les extrémités (31) des entrées de courant (27a, b; 28a, b) de l'enceinte de décharge (1) sont orientées parallèlement à l'axe longitudinal de la lampe à l'aide de languettes de retenue (23, 24, 25, 26)
- les bornes électriques du dispositif de connexion en série aux entrées de courant (27a, b ; 28a, b) sont constituées de fils (35, 36, 37, 38) recourbés en forme d'étrier, qui s'étendent sensiblement dans le sens perpendiculaire à l'axe longitudinal de la lampe
- lorsque l'embase (2) est assemblée, les fils de raccordement (35, 36, 37, 38) en forme d'étrier du dispositif de connexion en série sont plaquées contre la paroi intérieure de la zone de forme cylindrique du boîtier (4) de l'embase, et les languettes de retenue (23, 24, 25, 26) du couvercle (3) de l'embase sont plaquées sur les extrémités (31) des entrées de courant (27a, b ; 28a, b) de l'enceinte de décharge (1), de façon à établir une liaison électrique entre les électrodes (16, 17) et le dispositif de connexion en série.

2. Lampe à décharge basse pression, peu encombrante, selon la revendication 1, caractérisée en ce que les languettes de retenue (23, 24, 25, 26) sont constituées de prolongements du bord du couvercle (3) de l'embase.

3. Lampe à décharge basse pression, peu encombrante, selon la revendication 2, caractérisée en ce que les languettes de retenue (23, 24, 25, 26) ont une section transversale rectangulaire.

4. Lampe à décharge basse pression, peu encombrante, selon la revendication 1, caractérisée en ce que les extrémités libres des languettes de retenue (23, 24, 25, 26) comportent une encoche (30).

5. Lampe à décharge basse pression, peu encombrante, selon la revendication 1, caractérisée en ce que les extrémités libres des languettes de retenue (23, 24, 25, 26) sont pourvues d'un biseautage (29).

6. Lampe à décharge basse pression, peu encombrante, selon les revendications 1 et 4, caractérisée en ce que les extrémités (31) des entrées de courant (27a, b ; 28a, b) de l'enceinte de décharge (1) sont guidées de l'intérieur par les encoches (30) et le long de la paroi extérieure des languettes de retenue (23, 24, 25, 26).

7. Lampe à décharge basse pression, peu encombrante, selon la revendication 1, caractérisée en ce que la plaque de montage (8) a une forme dont les dimensions extérieures sont légèrement inférieures à la section transversale intérieure de la zone de forme cylindrique du boîtier (4) de l'embase.

8. Lampe à décharge basse pression, peu encombrante, selon la revendication 1, caractérisée en ce que, sur le bord de la plaque de montage (8), les deux extrémités (41, 42) des fils de raccordement (35, 36, 37, 38) en forme d'étrier du dispositif de connexion en série sont enfichées dans la plaque de montage (8) du côté faisant face à la douille (5) de l'embase, et en ce que, du côté faisant face au couvercle (3), elles sont soudées dans la plaque de montage (8).

9. Lampe à décharge basse pression, peu encombrante, selon la revendication 1, caractérisée en ce que, vus de dessus, les fils de raccordement (35, 36, 37, 38) en forme d'étrier du dispositif de connexion en série ont un profil en forme de U avec des angles (39, 40) sensiblement droits.

10. Lampe à décharge basse pression, peu encombrante, selon l'une ou plusieurs des revendications 1 à 9, caractérisée en ce que, lorsque l'embase (2) est assemblée, les languettes de retenue (23, 24, 25, 26) passent avec les extrémités (31) des entrées de courant (27a, b ; 28a, b) à travers les fils de raccordement (35, 36, 37, 38) en forme d'étrier ayant un profil en forme de U.

11. Lampe à décharge basse pression, peu encombrante, selon la revendication 1, caractérisée en ce que - vus dans le sens perpendiculaire à la plaque de montage (8) - les fils de raccordement (35, 36, 37, 38) en forme d'étrier du dispositif de connexion en série comportent des indentations cintrées (46, 47) à la transition vers la fixation soudée sur la plaque de montage (8).

12. Lampe à décharge basse pression, peu encombrante, selon l'une ou plusieurs des revendications 7 à 11, caractérisée en ce que le bord de la plaque de montage (8) comporte une encoche (43) entre les deux extrémités soudées (41, 42) de chacun des fils de raccordement (35, 36, 37, 38) en forme d'étrier du dispositif de connexion en série.

13. Lampe à décharge basse pression, peu encombrante, selon la revendication 1, caractérisée en ce qu'il est prévu des nervures (44, 45) de section transversale rectangulaire sur la paroi interieure de la zone cylindrique du boîtier (4) de l'embase, qui s'étendent parallèlement à l'axe longitudinal de la lampe.

14. Lampe à décharge basse pression, peu encombrante, selon la revendication 13, caractérisée en ce que les nervures (44, 45) sont prévues sur la paroi interieure du boîtier (4) de l'embase aux endroits où, à l'état assemblé de l'embase (2), les angles droits (39, 40) des fils de raccordement (35, 36, 37, 38) en forme d'étrier touchent la paroi du boîtier (4) de l'embase.

15. Lampe à décharge basse pression, peu encombrante, selon les revendications 9 et 14, caractérisée en ce qu'à l'état assemblé de l'embase (2), les fils de raccordement (35, 36, 37, 38) en forme d'étrier s'appliquent par leurs angles droits (39, 40) sur les extrémités des nervures (44, 45).

16. Lampe à décharge basse pression, peu encombrante, selon la revendication 13, caractérisée en ce que, pour la mise en appui des angles droits (39, 40) des fils de raccordement (35, 36, 37, 38) en forme d'étrier, il est prévu une ou plusieurs nervures d'appui (48, 49) de section transversale triangulaire entre deux nervures (44, 45) respectives, lesquelles sont également parallèles à l'axe longitudinal de la lampe et s'appliquent contre les fils de raccordement (35, 36, 37, 38) en forme d'étrier à l'état assemblé de l'embase (2).

17. Lampe à décharge basse pression, peu encombrante, selon la revendication 6, caractérisée en ce que les extrémités (31) des entrées de courant (27a, b ; 28a, b) de l'enceinte de décharge (1) sont en fil étamé avec un revêtement d'au moins 4 µm d'étain.

18. Lampe à décharge basse pression, peu encombrante, selon la revendication 1, caractérisée en ce que dans la région des pincements (19) de l'enceinte de décharge (1), les parties (32 a, b) des entrées de courant (27a, b ; 28a, b) sont en un fil composé de 50 % de fer, de 47 % de nickel et de 3 % de chrome.

19. Lampe à décharge basse pression, peu encombrante, selon les revendications 17 et 18, caractérisée en ce que des éléments (33a, b) en fil enrobé de cuivre sont insérés par soudage bout à bout entre les extrémités (31) et les parties (32a, b) des entrées de courant (27a, b ; 28a, b) se trouvant dans la région des pincements (19).

20. Lampe à décharge basse pression, peu encombrante, selon la revendication 1, caractérisée en ce que les fils de raccordement (35, 36, 37, 38) en forme d'étrier du dispositif de connexion en série sont en fil étamé avec un revêtement d'au moins 4 µm de zinc.
